# EUROPEAN PATENT APPLICATION

(11) **EP 3 336 166 A1**
(43) Date of publication of application: **20.06.2018**
(21) Application number: 16204231.1
(22) Date of filing: 15.12.2016
(51) Int. Cl.: C12C 3/00

(54) **METHOD FOR PREPARING A BEVERAGE COMPONENT COMPRISING VOLATILE THIOLS, BEVERAGE COMPONENT OBTAINED BY SUCH METHOD AND USE OF SUCH BEVERAGE COMPONENT**

(71) Applicant: Anheuser-Busch InBev S.A., 1000 Brussels (BE)
(72) Inventor: The designation of the inventor has not yet been filed
(74) Representative: BiiP cvba

(57) **Abstract**

Method for preparing a beverage component, the method comprising the steps of:
(a) providing an aqueous hop suspension comprising hops or hop derivates, the hops or hop derivates comprising thiol precursors;
(b) in vitro treating the hop suspension with an enzyme or enzyme mixture having beta-lyase activity.

## Description

### BACKGROUND TO THE INVENTION

The present invention concerns a beverage component comprising volatile thiols originating from hops or hop derivates, and a method of preparing such beverage component.

### BACKGROUND TO THE INVENTION

Dry hopping is a well-known practice in beer production to add flavours to the beer. Hops and in particular aromatic hop varieties contain a large amount of flavour components that are extracted to the beer during late or dry hopping and provide to the beer a specific flavour profile in the form of volatile and odourant components.

A drawback of the dry hopping process is the relative low yield of flavour components. Hence large amounts of hops are needed to effectively flavour the beer.

Research has shown that hops contain far more flavour components than the ones extracted during dry hopping of beer. However, a large part of the flavour components are chemically bound to entities in the hop and/or are present as flavour precursors in a non-volatile and non-odourant form that has to be released and/or converted into a volatile and odourant form resulting in effectively flavouring beer. These hop flavour precursors can be chemically assigned to two major types: S-conjugates of thiol and glycoside conjugates of aglycones.

Conversion of S-conjugate precursors and glycoside conjugate precursors to, respectively, volatile and odourant thiols and aglycones can be performed by brewer's yeast in the fermentation tank, however in case of adding hops to the fermentation tank in a late stage of fermentation or even during maturation, as is common practice in dry hopping processes, no or insufficient viable yeast is present to perform effective conversion of the hop flavour precursors. In case one would add aromatic hops in an earlier stage of fermentation when sufficient viable yeast is present, the yeast biotransformation is thought to release less than 5% of the available hop aromas.

It will be appreciated from the above that there remains a market need for improving the efficiency and the perhaps even more importantly the potential of dry hopping in terms of the diversity of type and amount of flavours to be added to beer.

### SUMMARY OF THE INVENTION

The present invention addresses the above market need by providing a method allowing to unlock a whole class or range of currently overlooked flavours provided to the beer during dry hopping. The present invention is defined in the appended independent claims. Preferred embodiments are defined in the dependent claims. In particular, the invention concerns a method for preparing a beverage component, the method comprising the steps of:
(a) providing an aqueous hop suspension comprising hops or hop derivates, the hops or hop derivates comprising thiol precursors;
(b) *in vitro* treating the hop suspension with an enzyme or enzyme mixture having beta-lyase activity.

The aqueous hop suspension can be a hop in beer suspension prepared by directly adding the hops or hop derivates in the fermentation or maturation tank or can be prepared in-situ at the beer production site or ex-situ at a hops conversion facility by adding hops or hop derivates to water or a beer-like aqueous solution.

It is preferred to add pyridoxal phosphate to the aqueous hop suspension and/or to select the enzyme or enzyme mixture to comprise gamma-glutamyl transpeptidase.

In a preferred method of the invention, the suspended hops or hop derivates are treated with the enzyme or enzyme mixture for a period of at least 10 minutes at a temperature ranging between 5°C and 72°C, preferably between 15°C and 42°C and/or at a pH ranging between 3,2 and 8,5.

The aqueous suspension preferably has an alcohol concentration of at least 0,01vol%, preferably at least 3vol% and most preferably at least 5vol%.

The hop or hop derivates are preferably chosen from the group comprising aromatic hop cultivars or dual-purpose hop cultivars, in particular from one or more of the following hop varieties: Sorachi Ace, Nelson Sauvin, Tomahawk, Citra, SAAZ, Mozaik, Centennial.

The method preferably comprises a step of filtering or centrifuging the suspension after enzyme treatment to obtain a retentate and a permeate, and collecting the permeate as said beverage component. This permeate can subsequently be used as an ingredient in beverage or food production or can be further concentrated or fractionated to obtain purified flavour components.

The present invention further concerns a beverage component comprising at least one or more of the following components:
(a) 3-sulfanylhexan-1-ol;
(b) 3-sulfanylhexyl acetate;
(c) 4-sulfanyl-methylpentan-2-one;
(d) 3-sulfanyl-4-heptan-1-ol;
(e) 3-sulfanylheptyl acetate;
characterized in that the total concentration of the combined components (a)+(b)+(c)+(d)+(e) is at least 200ppt or in that at least three of the components (a) to (e) are present in a concentration of at least 5ppt.

The present invention also concerns the use of the above defined beverage component as a dry hopping ingredient or as an ingredient for addition to a malt based such as beer, including non-alcoholic (>0,05%ABV) or low-alcoholic beer (>0,5%ABV) or cider based beverage.

### DEFINITIONS

Hops or hop derivates are herein defined as all kind of hop products known for imparting flavours to beer and include whole hop cones, hop extracts, hop oils, hop resins as well as pelletized or otherwise compacted hops or hop products. Hops or hop derivates comprising all or a major part of the hop oils of the original hop cones are preferred. Also preferred are hops or hop derivates originating from so-called aromatic hop cultivars (such as SAAZ, Cascade) or dual-purpose hop cultivars (such as Sorachi Ace, Nelson Sauvin, Tomahawk and Citra).

### DETAILED DESCRIPTION OF A PREFERRED EMBODIMENT

The present invention particularly focusses on unlocking S-conjugates of thiol, by allowing efficient conversion of the S-conjugates bound to the hops or hop derivates to volatile and odourant aromas enriching the beer's organoleptic profile.

It has been found that in the chemical pathway of converting S-conjugates to volatile and odourant thiols, the conversion of cysteine bound thiols to volatile thiols is an important bottleneck.

It has been found that when treating an aqueous hops or hop derivates suspension with an enzyme or enzyme mixture showing a beta-lyase activity, the efficiency of conversion of S-conjugates to polyfunctional thiols imparting a flavour to beer can be increased. It is preferred to add pyridoxal phosphate (eg. PLP 30) to the aqueous hop suspension as co-factor for the beta-lyase activity.

Sufficient high beta-lyase activity is achieved by providing the enzyme or enzyme mixture, in a manner wherein the enzyme or enzyme mixture is readily available of binding substrate, in particular, by providing the enzyme or enzyme mixture *in vitro* wherein the enzyme or enzymes of the enzyme mixture are not contained in microbiological cells but are freely suspended in the aqueous hop suspension. In that case, the cysteine-S-conjugate is efficiently converted to a volatile thiol by the enzyme(s).

It is believed that the conversion efficiency can be even further improved when the aqueous hop suspension is treated with an enzyme or enzyme mixture having gamma-glutamyl transpeptidase activity prior to or simultaneously with the treatment with the beta-lyase. When the enzyme or enzyme mixture having the gamma-glutamyl transpeptidase activity also shows amino peptidase, dipeptidase and/or carboxypeptidase activity, the conversion efficiency can be even further improved.

In operation, the hops or hop derivates are preferably suspended in water, in beer or in a beer-like solution to achieve a solution having [concentration] and treated with the enzyme or enzyme mixture for a period of at least 10 minutes at a temperature ranging between 5°C and 72°C, preferably between 15°C and 42°C. pH range of the solution is preferably maintained in a range between 3,2 and 8,5 during the treatment. After treatment, the suspension is preferably filtered and/or centrifuged to obtain a retentate and a permeate, and collecting the permeate as a beverage component that can be added to green beer or a matured beer as a concentrated hop flavour solution.

The aqueous suspension preferably has an alcohol concentration of at least 0,01vol%, preferably at least 3vol% and most preferably at least 5vol%.

The process according to the invention allows for preparing a beverage component comprising one or more of the following components:
(a) 3-sulfanylhexan-1-ol;
(b) 3-sulfanylhexyl acetate;
(c) 4-sulfanyl-methylpentan-2-one;
(d) 3-sulfanyl-4-heptan-1-ol;
(e) 3-sulfanylheptyl acetate;
with the total concentration of the combined components (a)+(b)+(c)+(d)+(e) comprising at least 200 ppt or with at least three of the mentioned components (a), (b), (c), (d) and (e) are present in a concentration of at least 5ppt.

The beverage component according to the invention can be used preparing a beverage by adding the beverage component to another beverage component or diluent 1/3 to 1/30 as example given a hopping ingredient during beer or cider production. As an example, one could use a beverage component according to the invention by mixing it with a so-called beer concentrate and a diluent. The beverage component can also be added to a finished beverage such as hop water, malty water, fruit juices, beer or cider based, including non-alcoholic (>0,05%ABV) or low-alcoholic beverages (including beers) (>0,5%ABV).

The beverage component according to the invention can also be further concentrated, fractionated or purified by chromatography, adsorption, distillation or other selective concentration techniques known in the art to obtain one or more purified or concentrated components (a) to (e) that can be used a flavour components in food, in particular beverages such as beer or cider, or other industries.

### EXAMPLES

### Example 1

Hop variety: Citra
1 liter hydroalcoholic media (10% ABV) - pyridoxal-5-phosphate (0.1mM).
50g hop was suspended in the hydroalcoholic medium.
50mg of beta lyase (75-150 units/mg) (*in vitro*) was added to the hop suspension and the suspension was maintained at 28 °C for 30 min, under continuous stirring at 100rpm. The pH of the solution was 7.7.

After 30 minutes, the suspension was filtered over a filter allowing removing the solid hop material and the permeate was found to comprise:
(a) w% 3-sulfanylhexan-1-ol;
(b) w% 3-sulfanylhexyl acetate;
(c) w% 4-sulfanyl-methylpentan-2-one;
(d) w% 3-sulfanyl-4-heptan-1-ol;
(e) w% 3-sulfanylpentan-1-ol
wherein the total concentration of the combined components (a)+(b)+(c)+(d)+(e) was more than 500 ppt.

### Example 2

Hop variety: Centennial
1 liter hydroalcoholic media (10% ABV) - pyridoxal-5-phosphate (0.1mM)
50g hop pellets T90 were suspended in the hydroalcoholic medium.
70mg gamma-glutamyl transpeptidase (35-60 units/mg) and 40mg carboxypeptidase (50-120 units/mg) were added to the suspension (*in vitro*) and the suspension was incubated 28 °C for 3 0 min with continuous stirring at 100rpm. The pH of the suspension was 7.3.

After 30 minutes, the suspension was centrifuged at 500 rpm for 10 min and 950 ml of supernatant was collected.

Subsequently 50mg of beta lyase (75-150 units/mg) was added *in vitro* to the supernatant and the mixture was set at 28 °C for 30 min with continuous stirring at 100rpm. The pH of the mixture was 7.3.

After 30 minutes, the mixture was filtered over a filter allowing removing the solid hop material and the permeate (beverage component) was found to comprise:
(a) w% 3-sulfanylhexan-1-ol;
(b) w% 3-sulfanylhexyl acetate;
(c) w% 4-sulfanyl-methylpentan-2-one;
(d) w% 3-sulfanyl-4-heptan-1-ol;
(e) w% 3-sulfanylpentan-1-ol
wherein the total concentration of the combined components (a)+(b)+(c)+(d)+(e) was more than 1200 ppt.

### Example 3

Hop variety: Mosaik
1 liter beer or cider (5% ABV) - pyridoxal-5-phosphate (0.1mM)
10g hop concentration was suspended in 1 liter beer or cider (5% ABV) - pyridoxal-5-phosphate (0.1mM)
30mg of beta lyase (75-150 units/mg) was added in vitro to the suspension and the mixture was incubated at 24 °C for 40 min with continuous stirring 50rpm. (pH 7.3)

After 30 minutes, the mixture was filtered over a filter allowing removing the solid hop material and the permeate (beverage component) was found to comprise:
(a) w% 3-sulfanylhexan-1-ol;
(b) w% 3-sulfanylhexyl acetate;
(c) w% 4-sulfanyl-methylpentan-2-one;
(d) w% 3-sulfanyl-4-heptan-1-ol;
(e) w% 3-sulfanylpentan-1-ol
wherein the total concentration of the combined components (a)+(b)+(c)+(d)+(e) is more than 200 ppt.

## Claims

1. Method for preparing a beverage component, the method comprising the steps of:
(a) providing an aqueous hop suspension comprising hops or hop derivates, the hops or hop derivates comprising thiol precursors;
(b) *in vitro* treating the hop suspension with an enzyme or enzyme mixture having beta-lyase activity.

2. Method according to claim 1, comprising the step of adding pyridoxal phosphate to the aqueous hop suspension.

3. Method according to claim 1, the enzyme or enzyme mixture having gamma-glutamyl transpeptidase.

4. Method according to any of the preceding claims, wherein the suspended hops or hop derivates are treated with the enzyme or enzyme mixture for a period of at least 10 minutes at a temperature ranging between 5°C and 72°C, preferably between 15°C and 42°C.

5. Method according to any of the preceding claims, wherein the suspended hops or hop derivates are treated with the enzyme or enzyme mixture at a pH ranging between 3,2 and 8,5.

6. Method according to any of the preceding claims, the aqueous suspension having an alcohol concentration of at least 0,01vol%.

7. Method according to any of the preceding claims, the hop or hop derivates chosen from the group comprising aromatic hop cultivars or dual-purpose hop cultivars, in particular from one or more of the following hop varieties: Sorachi Ace, Nelson Sauvin, Tomahawk, Citra, SAAZ, Mozaik, Centennial, Cascade.

8. Method according to any of the preceding claims, comprising filtering or centrifuging the suspension after enzyme treatment to obtain a retentate and a permeate, and collecting the permeate as said beverage component.

9. Beverage component comprising at least one or more of the following components:
(a) 3-sulfanylhexan-1-ol;
(b) 3-sulfanylhexyl acetate;
(c) 4-sulfanyl-methylpentan-2-one;
(d) 3-sulfanyl-4-heptan-1-ol;
(e) 3-sulfanylheptyl acetate;
with the total concentration of the combined components (a)+(b)+(c)+(d)+(e) is at least 200 ppt; or with at least three of the mentioned components (a), (b), (c), (d) and (e) present in a concentration of at least 5ppt.

10. Beverage component according to claim 9, comprising at 5ppt of three or more of the following components:
(a) w% 3-sulfanylhexan-1-ol;
(b) w% 3-sulfanylhexyl acetate;
(c) w% 4-sulfanyl-methylpentan-2-one;
(d) w% 3-sulfanyl-4-heptan-1-ol;
(e) w% 3-sulfanylheptyl acetate;
and the total concentration of the combined components (a)+(b)+(c)+(d)+(e) is at least 200 ppt.

11. Use of a beverage component as identified in any of claims 9-10 or as prepared by a method as identified in any of claims 1-8 for preparing a beverage by adding the beverage component to another beverage component or diluent.

12. Use of a beverage component as identified in any of claims 9-10 or as prepared by a method as identified in any of claims 1-8 as a hopping ingredient during beer or cider production.

13. Use according to claim 11 or 12, comprising adding the beverage component to a finished beer or cider; and/or prior or after filtration of the beer or cider; and/or during fermentation; and/or during maturation of the beer or cider.

14. Method according to any of the claims 1 to 8, comprising the step of concentrating or fractionating the beverage component.
